# EUROPEAN PATENT APPLICATION

(11) **EP 4 215 870 A1**
(43) Date of publication of application: **26.07.2023**
(21) Application number: 23151966.1
(22) Date of filing: 17.01.2023
(51) Int. Cl.: G01B 11/02

(54) **MEASUREMENT DEVICE AND MEASUREMENT METHOD**

(30) Priority: 21.01.2022 JP 2022007905
(71) Applicant: Panasonic Intellectual Property Management Co., Ltd., Osaka-shi, Osaka 540-6207 (JP)
(72) Inventor: ONO, Shinji, Osaka, 540-6207 (JP)
(74) Representative: SSM Sandmair

(57) **Abstract**

In a measurement device, a light receiving area is divided into measurement regions defined by first boundaries also divided into peak position identification regions defined by second boundaries different from the first boundaries and each containing at least a part of one measurement region and a part of an adjacent measurement region. The light receiving area contains integrated regions each formed by adjacent two of the measurement regions. The signal processing unit is configured to: determine a target peak position identification region containing a light receiving element where an amount of received light is maximum; estimate an amount of received light of a disturbance light component in a target integrated region containing the peak position identification region, based on a representative value of amounts of received light in measurement regions outside the target integrated region; and control a threshold based on the estimated amount.

## Description

### TECHNICAL FIELD

The present disclosure relates to a measurement device and a measurement method for optically measuring an object using a threshold.

### BACKGROUND ART

In related-art, there has been known a measurement device for measuring a displacement of an object, a surface shape of the object, and the like using a principle of triangulation. The measurement device irradiates an object with light projected from a light projecting unit, receives reflected light from the object by an image sensor, detects a light receiving center position based on an amount of received light in each pixel of the image sensor, and measures a displacement of the object or the like based on the light receiving center position.

Specifically, when the amount of received light (light receiving signal level) in each pixel of the image sensor is sequentially read, a light receiving signal level in each pixel is compared with a preset threshold, and a pixel range in which the light receiving signal level is equal to or larger than the threshold is set as a calculation range. Then, a peak position in a light receiving signal level distribution (received light waveform) is obtained in the set calculation range, and the obtained position is detected as the light receiving center position.

An optical distance measurement device is known as a related-art measurement device. The optical distance measurement device includes a light emitting element, a light emitting optical system that focuses a light flux emitted from the light emitting element and irradiates a measurement object with spot light, a light receiving optical system that condenses reflected light from the measurement object, a light receiving element that detects the spot light from the measurement object condensed by the light receiving optical system, and a signal processing unit that processes a light receiving signal from the light receiving element. The light receiving element is a line sensor or an area sensor that detects an intensity distribution of the reflected light from the measurement object. The signal processing unit includes a distance calculation unit that calculates a spot position of the spot light condensed by the light receiving optical system on the light receiving element and detects a distance from the spot position to the measurement object, and a correction calculation unit that corrects calculation of the distance by detecting an intensity distribution of cover reflected light in which light reflected by a light-transmitting protective cover disposed between the measurement obj ect and the light emitting optical system as well as the light receiving optical system is detected by the light receiving element via the light receiving optical system. The correction calculation unit calculates a correction coefficient corresponding to the intensity distribution of the cover reflected light based on an intensity distribution in a partial region of at least one of both ends of the light receiving element to correct the intensity distribution of the spot light, and the distance calculation unit calculates the distance to the measurement object based on an output of the correction calculation unit.

Patent Literature 1: JP2014-224726A

### SUMMARY OF INVENTION

In Patent Literature 1, a light receiving area of the light receiving element has a central portion and both end portions. When a peak of the amount of received light is present in the vicinity of a boundary between the central portion and one of both end portions of the light receiving area, the light intensity distribution has a mountain shape (Gaussian shape), and thus a foot portion of the light intensity distribution enters a region (the one of both end portions or the central portion) adjacent to a region (the central portion or the one of both end portions) where the peak of the amount of received light is located. Therefore, in Patent Literature 1, accuracy for correcting a signal (noise, disturbance light, etc.) reflected by the protective cover and detected by the light receiving element may be lowered. Therefore, an influence of the disturbance light remains, and measurement accuracy of the object may be lowered.

The present disclosure provides a measurement device and a measurement method capable of reducing an influence of disturbance light and improving measurement accuracy of an object.

The present disclosure provides a measurement device for optically measuring an object using a threshold, the measurement device including: a light projecting unit configured to project first projection light onto the object; a light receiving unit including a plurality of light receiving elements, the light receiving unit being configured to generate a first light receiving signal in response to receiving first reflected light obtained by reflecting or scattering the first projection light by the object; and a signal processing unit configured to process the first light receiving signal, wherein a light receiving area containing the plurality of light receiving elements of the light receiving unit is divided into a plurality of measurement regions defined by a plurality of first boundaries that divide the plurality of light receiving elements into a plurality of groups corresponding to the plurality of measurement regions, each of the plurality of groups including one or more light receiving elements, and the light receiving area is also divided into a plurality of peak position identification regions defined by a plurality of second boundaries different from the plurality of first boundaries, wherein each of the plurality of peak position identification regions contains at least a part of one measurement region and a part of another measurement region adjacent to the one measurement region, wherein the light receiving area contains a plurality of integrated regions, and each of the plurality of integrated regions is formed by adjacent two of the plurality of measurement regions, and wherein the signal processing unit is configured to: determine a target peak position identification region that is one of the plurality of peak position identification regions, the target peak position identification region containing a position of a light receiving element where an amount of received light in the first light receiving signal is maximum; estimate an amount of received light of a disturbance light component in a target integrated region that is one of the plurality of integrated regions, the target integrated region containing the target peak position identification region, based on a representative value of an amount of received light in each of at least two of the plurality of measurement regions located outside the target integrated region; and control the threshold based on the amount of received light of the disturbance light component.

The present disclosure provides a measurement method for optically measuring an object using a threshold, the measurement method including: a step of projecting first projection light onto the object; a step of generating, by a light receiving unit including a plurality of light receiving elements, a first light receiving signal in response to receiving first reflected light obtained by reflecting or scattering the first projection light by the object; and a step of processing the first light receiving signal, wherein a light receiving area containing the plurality of light receiving elements of the light receiving unit is divided into a plurality of measurement regions defined by a plurality of first boundaries that divide the plurality of light receiving elements into a plurality of groups corresponding to the plurality of measurement regions, each of the plurality of groups including one or more light receiving elements, and the light receiving area is also divided into a plurality of peak position identification regions defined by a plurality of second boundaries different from the plurality of first boundaries, wherein each of the plurality of peak position identification regions contains at least a part of one measurement region and a part of another measurement region adj acent to the one measurement region, wherein the light receiving area contains a plurality of integrated regions, and each of the plurality of integrated regions is formed by adjacent two of the plurality of measurement regions, and wherein the step of processing the first light receiving signal includes: a step of determining a target peak position identification region that is one of the plurality of peak position identification regions, the target peak position identification region containing a position of a light receiving element where an amount of received light in the first light receiving signal is maximum; a step of estimating an amount of received light of a disturbance light component in a target integrated region that is one of the plurality of integrated regions, the target integrated region containing the target peak position identification region, based on a representative value of an amount of received light in each of at least two of the plurality of measurement regions located outside the target integrated region; and a step of controlling the threshold based on the amount of received light of the disturbance light component.

According to the present disclosure, the influence of disturbance light can be reduced, and the measurement accuracy of the object can be improved.

### BRIEF DESCRIPTION OF DRAWINGS

The present disclosure will be described in detailed based on the following figures, wherein:
Fig. 1 is a conceptual diagram showing a situation in which a measurement device according to an embodiment of the present disclosure projects projection light onto an object and receives reflected light;
Fig. 2 is a block diagram showing an example of a measurement device;
Fig. 3 is a diagram showing an example of a light receiving signal generated by a light receiving unit, a measurement region, a peak position identification region, and an integrated region;
Fig. 4 is a conceptual diagram showing an example of determining a peak position and an example of estimating an amount of received disturbance light by the measurement device; and
Fig. 5 is a graph showing another example of estimating an amount of received light of a disturbance light component by the measurement device.

### DESCRIPTION OF EMBODIMENTS

Hereinafter, an embodiment will be described in detail with reference to the drawings as appropriate. Unnecessarily detailed description may be omitted. For example, detailed description of well-known matters and description of substantially the same configuration may be omitted. This is to avoid unnecessary redundancy of the following description and to facilitate understanding of those skilled in the art. The accompanying drawings and the following description are provided for those skilled in the art to fully understand the present disclosure, and are not intended to limit the scope of the claims.

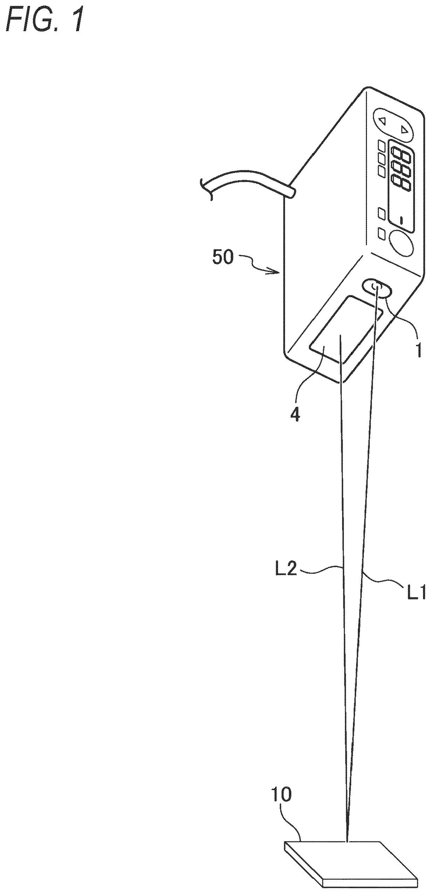

Fig. 1 is a conceptual diagram showing a situation in which a measurement device according to an embodiment of the present disclosure projects projection light onto an object and receives reflected light. In a measurement device 50, a light projecting unit 1 projects projection light L1 onto an object 10, and a light receiving unit 4 receives reflected light L2 obtained by reflecting or scattering the projection light L1 by the object 10. The measurement device 50 optically measures the object 10 based on a light receiving signal obtained from the reflected light L2. The measurement device 50 can operate as, for example, a measurement sensor, a displacement sensor, or a distance measurement sensor. The measurement device 50 may measure, for example, an absolute distance or a relative distance. For example, the measurement device 50 may detect presence or absence of a displacement such as unevenness, or an amount of the displacement, with respect to a reference plane.

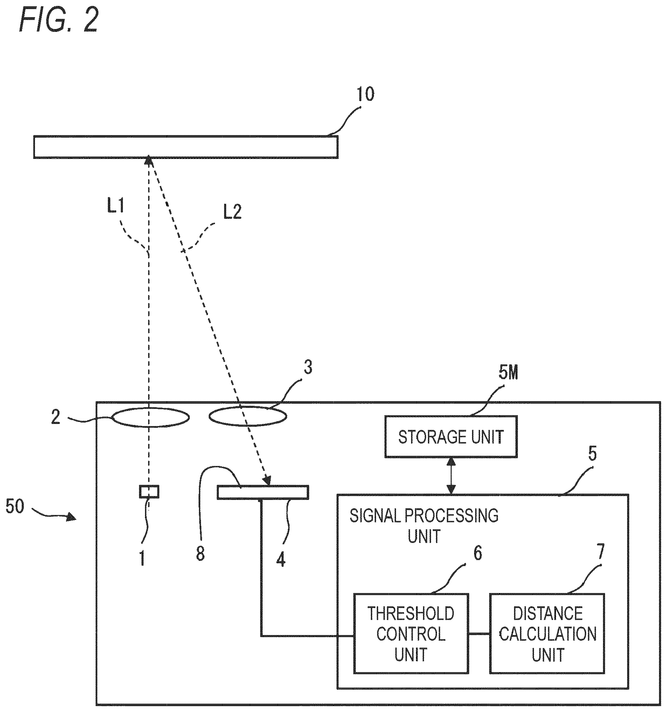

Fig. 2 is a block diagram showing an example of the measurement device 50 according to the embodiment. The measurement device 50 includes the light projecting unit 1, a light emitting lens 2, a light receiving lens 3, a light receiving unit 4, a signal processing unit 5, and a storage unit 5M. The light projecting unit 1 includes a light emitting element or the like. The light emitting element includes, for example, a laser diode.

The light receiving unit 4 includes a plurality of light receiving elements. The light receiving element is, for example, a semiconductor light receiving element including a photodiode or a complementary metal-oxide-semiconductor (CMOS), and converts an optical signal of received light into an electrical signal. The light receiving unit 4 generates, by the light receiving elements, the light receiving signal in response to receiving the reflected light L2 obtained by reflecting or scattering the projection light L1 by the object 10. The light receiving unit 4 constitutes a line sensor in which the light receiving elements are arranged in a line on an x axis, and may be an area sensor in which the light receiving elements are arranged on a two-dimensional plane.

In Fig. 2, the projection light L1 projected from the light projecting unit 1 is incident on the object 10, and the reflected light L2 from the object 10 is incident on the light receiving unit 4 of the measurement device 50. The reflected light L2 shown in the drawing represents an optical axis detected by the light receiving unit 4 as a result of multiple reflection.

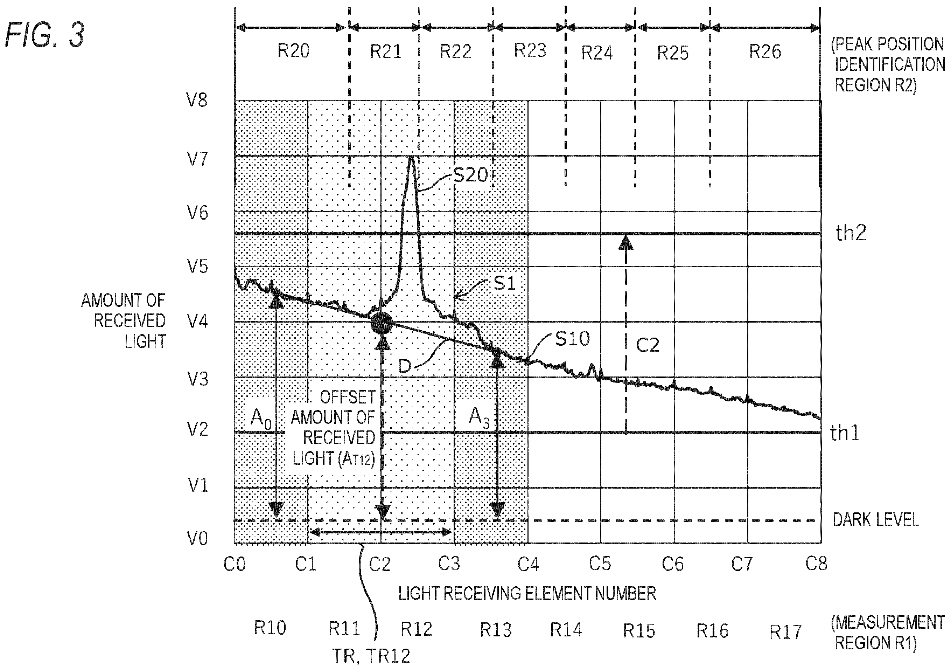

The projection light L1 projected from the light projecting unit 1 is emitted via the light emitting lens 2. The object 10 is irradiated with most of an emitted light flux of the projection light L1. The reflected light L2 from the object 10 at a sufficiently distant position is condensed by the light receiving lens 3 to form a light spot on the light receiving unit 4. A light receiving area 8 of the light receiving unit 4 has a size necessary for detecting an intensity distribution S20 (see Fig. 3) of the object 10. The light receiving area 8 is an area including the plurality of light receiving elements.

The signal processing unit 5 includes, for example, a processor. The processor implements various functions (or performs various operations) of the signal processing unit 5 by executing programs (or instructions) stored in the storage unit 5M. The processor may include a micro processing unit (MPU), a central processing unit (CPU), a digital signal processor (DSP), or the like. The processor may be implemented by various integrated circuits (for example, a large scale integration (LSI) or a field programmable gate array (FPGA)). The signal processing unit 5 integrally controls units of the measurement device 50 and executes various types of processing. The signal processing unit 5 includes a threshold control unit 6 and a distance calculation unit 7.

The storage unit 5M includes a primary storage device (for example, a random access memory (RAM) or a read only memory (ROM)). The memory 13 may include a secondary storage device, a tertiary storage device, or the like, or may include a removable storage medium. The storage unit 5M stores various data, information, or the like. The storage unit 5M may store information on the light receiving signal (information on a received light waveform indicating the light receiving signal). The information on the light receiving signal is used to control a threshold th for measuring the object 10.

The threshold control unit 6 controls the threshold th for measuring the object 10. The details of the threshold control unit 6 will be described later.

The distance calculation unit 7 measures the object 10 according to which light receiving element in the plurality of light receiving elements of the light receiving unit 4 receives light. The distance calculation unit 7 may calculate a distance from the measurement device 50 to the object 10. Information (cell distance information) on a detected distance for each light receiving element may be stored in the storage unit 5M. The distance calculation unit 7 may calculate the distance to the object 10 based on the cell distance information. The distance calculation unit 7 identifies one or more light receiving elements whose amount of received light in a light receiving signal S1 (see Fig. 3) received by the light receiving unit 4 is equal to or larger than the threshold th. The distance calculation unit 7 may calculate the distance to the object 10 based on a position of the identified light receiving element.

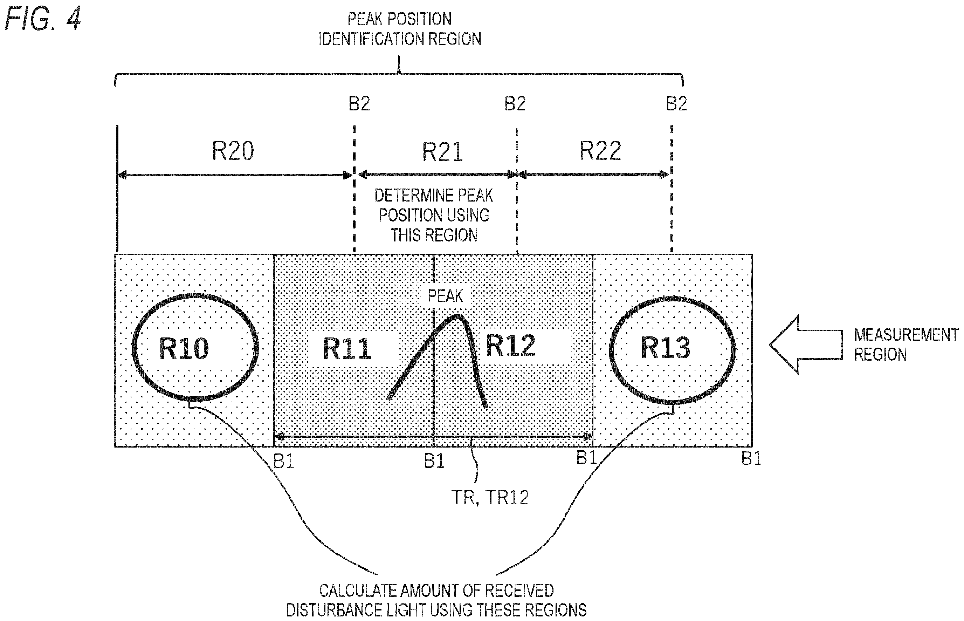

Fig. 3 is a diagram showing an example of the light receiving signal S1 generated by the light receiving unit 4, a measurement region R1, a peak position identification region R2, and an integrated region TR. Fig. 4 is a conceptual diagram showing an example of determining a peak position and an example of estimating an amount of received disturbance light by the measurement device 50. Fig. 4 is an enlarged view of measurement regions R10 to R13 in a graph in Fig. 3.

Fig. 3 shows the light receiving signal S1 generated by the light receiving unit 4 based on an intensity distribution (reflected light profile) of the reflected light L2 received in the light receiving area 8 of the light receiving unit 4. A horizontal axis (corresponding to the x axis) in Fig. 3 is an axis of coordinates of the light receiving area 8, and a number for each of the plurality of arranged light receiving elements (light receiving element number) is assigned thereon. The plurality of light receiving elements are arranged along the same direction as a direction in which the light projecting unit 1 and the light receiving unit 4 are arranged in Fig. 1.

The light receiving area 8 is divided into a plurality of measurement regions R1 defined by first boundaries B1 that collectively divide the plurality of light receiving elements. In Fig. 3, the light receiving area 8 includes eight measurement regions R1 (R10 to R17).

Fig. 3 shows the example in which the light receiving unit 4 constitutes a line sensor. In a case in which the light receiving unit 4 constitutes an area sensor, a plurality of measurement regions will be generated along an axis perpendicular to the x axis on a plane in the graph in Fig. 3.

A vertical axis (a y axis) in Fig. 3 indicates an amount of received light at each light receiving element (each light receiving position) (for example, a numerical value obtained by AD-converting a voltage). That is, the amount of received light in the light receiving signal S1 generated by the light receiving unit 4 based on the reflected light L2 is shown. The intensity distribution of the amount of received light in the light receiving signal S1 has a shape in which an intensity distribution S20 of an amount of received light from the object 10 is added to an intensity distribution S10 of an amount of received light that increases in any direction along the x axis (in a left direction in this example).

In Fig. 3, the intensity distribution S10 has a shape rising to the left, that is, a shape in which a value (amount of received light) increases as the amount of received light in the light receiving signal S1 received by the light receiving element having a smaller light receiving element number increases. This phenomenon is caused by an action of disturbance light from the surroundings, and is a phenomenon generally seen in measurement devices. That is, the intensity distribution S10 corresponds to an amount of received light of a disturbance light component. The intensity distribution S20 has a shape having a predetermined peak according to a so-called Gaussian distribution, and this peak corresponds to the reflected light L2 from the object 10.

The disturbance light appearing in the intensity distribution S10 includes, for example, ambient light. The ambient light includes light such as sunlight or illumination around the measurement device 50. When the disturbance light is reflected or scattered by the object 10, the disturbance light can be received by the light receiving unit 4 as a disturbance light component, which is a part of components of the reflected light L2.

In Fig. 3, the peak of the intensity distribution S20 is present in a measurement region R12, and the threshold control unit 6 processes the light receiving signal S1 and determines that the reflected light L2 from the object 10 is received in the measurement region R12. The distance calculation unit 7 calculates a distance to the object 10 based on the measurement region R1 where the reflected light L2 is received. In this case, the distance calculation unit 7 compares an amount of received light of each light receiving element with the threshold th set by the threshold control unit 6, and sets a distance measurement calculation range to include only the light receiving element whose amount of received light is equal to or larger than the threshold th. The distance calculation unit 7 calculates a peak position of the intensity distribution S20 in the set distance measurement calculation range, and detects this position as a light receiving center position. Accordingly, the measurement device 50 can reduce calculation errors. The distance calculation unit 7 may derive a distance corresponding to the detected light receiving position based on the cell distance information.

In Fig. 3, a dark level is set in advance to an amount of received light in a signal that is always generated even when the light receiving unit 4 does not detect light. For example, the dark level is set to a predetermined value when the measurement device 50 is started, and is stored in the storage unit 5M. For example, when the measurement device 50 is started, the signal processing unit 5 sets an initial setting threshold th1 and stores the initial setting threshold th1 in the storage unit 5M. The initial setting threshold th1 may be set in advance to an amount of received light that can be generally applied. When the initial setting threshold th1 is set, the distance calculation unit 7 sets, as a target of calculation for measurement of object 10, only a light receiving element that detects an amount of received light larger than the initial setting threshold th1.

Here, an environment of the measurement device 50 varies widely, and the initial setting threshold th1 may not be an appropriate amount of received light depending on the situation. Therefore, the threshold control unit 6 estimates an amount of received light of the disturbance light component, and controls the threshold th based on the estimated amount of received light of the disturbance light component. In the example in Fig. 3, the initial setting threshold th1 is excessively small, and all the light receiving elements are targets of calculation for deriving the light receiving center position by the distance calculation unit 7. Therefore, the threshold control unit 6 determines the intensity distribution S10 and the intensity distribution S20, and determines an estimated threshold th2 corresponding to the amount of received light (that is, a received light waveform) in the light receiving signal S1. That is, the threshold control unit 6 changes the initial setting threshold th1 to the estimated threshold th2 (arrow C2 in Fig. 3). The measurement device 50 can reduce the calculation errors by optically measuring the object 10 using the estimated threshold th2.

For example, when an amount of disturbance light component is large, that is, when the measurement device 50 is arranged in an environment brighter than an environment corresponding to the initial setting threshold th1, the estimated threshold th2 is changed to be larger than the initial setting threshold th1. When the amount of disturbance light component is small, that is, when the measurement device 50 is arranged in an environment darker than the environment corresponding to the initial setting threshold th1, the estimated threshold th2 is changed to be smaller than the initial setting threshold th1. The threshold th may be changed based on a temperature in addition to a brightness.

Based on an amount of received light of each light receiving element indicated by the light receiving signal S1, the threshold control unit 6 determines the peak position in the light receiving signal S1, that is, a position of a light receiving element whose amount of received light is the maximum (maximum light receiving position), and the peak position identification region R2 to which a maximum light receiving position belongs (in this example, a peak position identification region R21).

In the present embodiment, the light receiving area 8 is divided into two types of regions. Specifically, the light receiving area 8 is divided into the plurality of measurement regions R1. The light receiving area 8 is also divided into a plurality of peak position identification regions R2 for identifying the peak position in the light receiving signal S1. The plurality of peak position identification regions R2 are defined and divided by second boundaries B2 different from the first boundaries B1 that define the measurement region R1. When the measurement region R1 is determined, the peak position identification region R2 is determined. For example, the peak position identification region R2 is determined such that a central position between two adjacent first boundaries B1 defining the measurement region R1 is the second boundary B2.

The second boundary B2 is set, for example, at a central position of each of the measurement regions R11 to R16 on the x axis, that is, a central position of each of the measurement regions R11 to R16 in an arrangement direction of the light receiving elements. In other words, the second boundary B2 is set, for example, at the central position between two adjacent first boundaries B1. However, a position of the second boundary B2 is not limited to such an example as long as the second boundary B2 does not overlap the first boundary B1.

In Fig. 3, the peak position identification region R2 includes seven peak position identification regions R2 (R20 to R26) as described below.

Each of the plurality of peak position identification regions R2 includes a part of each of two measurement regions R1 adjacent to each other. For example, the peak position identification region R21 includes a part (right half) of the measurement region R11 and a part (left half) of the measurement region R12. The two measurement regions R1 adj acent to each other form the integrated region TR where the two measurement regions R1 are integrated.

In the present embodiment, an integrated region TRxy is represented, where x is a trailing sign of one (having a smaller sign) of the two adjacent measurement regions R1, and y is a trailing sign of the other (having a larger sign) of the two adjacent measurement regions R1. For example, the integrated region TR including the measurement regions R11, R12 is an integrated region TR12. Similarly, a relationship between the integrated region TR and the measurement region R1 is, for example, as follows.
Integrated region TR01: measurement regions R10, R11
Integrated region TR12: measurement regions R11, R12
Integrated region TR23: measurement regions R12, R13
Integrated region TR34: measurement regions R13, R14
Integrated region TR45: measurement regions R14, R15
Integrated region TR56: measurement regions R15, R16
Integrated region TR67: measurement regions R16, R17

The threshold control unit 6 determines the peak position identification region R2 including the maximum light receiving position in the light receiving signal S1. The maximum light receiving position is the position of the light receiving element whose amount of received light in the light receiving signal S1 is the maximum. In Fig. 3, the threshold control unit 6 determines that the peak position identification region R21 includes the maximum light receiving position.

The threshold control unit 6 determines that the peak position identification region R21 including the maximum light receiving position includes a part (right half) of the measurement region R11 and a part (left half) of the measurement region R12, and determines that the peak position identification region R21 is included in the integrated region TR12. The threshold control unit 6 calculates a representative value of an amount of received light in each of the plurality of measurement regions R1 located outside the peak position identification region R21, that is, outside the integrated region TR corresponding to the peak position identification region R21. In this example, the threshold control unit 6 calculates a representative value of an amount of received light in each of the measurement regions R10, R13 located outside the peak position identification region R21. Since the first boundary B1 and the second boundary B2 do not overlap each other, the measurement region R10 and the measurement region R13 are adjacent to and outside the integrated region TR12 corresponding to the peak position identification region R21.

In Fig. 3, the representative value of the amount of received light in the measurement region R10 is an amount A₀ of received light. The representative value of the amount of received light in the measurement region R13 is an amount A₃ of received light. For example, the threshold control unit 6 calculates an amount A_{T12} of received light in the integrated region (for example, a central position of the integrated region TR on the x axis) corresponding to the peak position identification region R21 including the maximum light receiving position, based on the amount A₀ of received light in the measurement region R10 and the amount A₃ of received light in the measurement region R13. The amount A_{T12} of received light indicates a representative value of an amount of received light in the integrated region TR. Based on a straight line D connecting the amounts A₀, A₃ of received light, which are the representative values, the threshold control unit 6 can calculate the amount A_{T12} of received light in the integrated region TR12 as, for example, a value on the straight line D.

The threshold control unit 6 calculates an offset amount of received light in the measurement region R1 by subtracting an amount of received light at the dark level from the representative value of the amount of received light in the measurement region R1. An offset amount of received light is calculated in the same manner not only for the measurement region R1 but also for the integrated region TR. Therefore, the threshold control unit 6 calculates the offset amount of received light in the measurement region R1 by subtracting the amount of received light at the dark level from the amount A_{T12} of received light in the integrated region TR12.

In this way, the threshold control unit 6 calculates an offset amount of received light in the integrated region TR12, based on the amounts A₀, A₃ of received light as the representative values in the measurement regions R10, R13, respectively. The threshold control unit 6 determines the estimated threshold th2 based on the initial setting threshold th1 and the offset amount of received light in the integrated region TR12. In this case, the threshold control unit 6 may determine the estimated threshold th2 by adding the offset amount of received light in the integrated region TR12 to the initial setting threshold th1.

Calculation of an offset value in the integrated region TR12 corresponding to the peak position identification region R21 including the maximum light receiving position corresponds to estimation of an amount of received light of the disturbance light component in the integrated region TR12. Then, the threshold control unit 6 controls the threshold th based on the offset amount of received light corresponding to the estimated amount of received light of the disturbance light component. Accordingly, the measurement device 50 can appropriately set the threshold th, and can appropriately limit the distance measurement calculation range of the light receiving center position for measurement of the object 10.

In the present embodiment, for example, even when the maximum light receiving position in the light receiving signal S1 is present in the vicinity of the first boundary B1, which is a boundary between the two measurement regions R1, the maximum light receiving position is not present in the vicinity of the first boundary B1 (a boundary between the measurement regions R12, R13), which is an outer edge of the integrated region TR12 corresponding to the peak position identification region R2 including the maximum light receiving position. That is, even when the maximum light receiving position is present in the vicinity of a boundary (first boundary B1) between the two measurement regions R1, the maximum light receiving position is present at a position (in the vicinity of the central position of the integrated region TR) deviated from a boundary (outer edge) of the integrated region TR including the maximum light receiving position. Therefore, it is possible to prevent a foot portion, where the amount of received light in the light receiving signal S1 is reduced from the maximum light receiving position, with a large value from entering the outside of the integrated region TR including the maximum light receiving position. Therefore, the measurement device 50 can prevent an original signal component of the light receiving signal S1 from entering the amount of received light from which the offset amount of received light is derived, and thus can derive the offset amount of received light with high accuracy. Therefore, the measurement device 50 can appropriately determine the threshold th.

Even when the maximum light receiving position in the light receiving signal S1 is present in the vicinity of a boundary (second boundary B2) between two adjacent peak position identification regions R2, an outer edge (first boundary B1) of the integrated region TR corresponding to the peak position identification region R2 is located outside a position of the second boundary B2. Therefore, it is possible to prevent a foot portion, where the amount of received light in the light receiving signal S1 is reduced from the maximum light receiving position, with a large value from entering the outside of the integrated region TR including the maximum light receiving position. Therefore, the measurement device 50 can prevent an original signal component of the light receiving signal S1 from entering the amount of received light from which the offset amount of received light is derived, and thus can derive the offset amount of received light with high accuracy. Therefore, the measurement device 50 can appropriately determine the threshold th.

Fig. 3 also includes a graph showing an example of estimating an amount of received light of the disturbance light component by the measurement device 50. The threshold control unit 6 may estimate the amount of received light of the disturbance light component based on the representative value of the amount of received light in the light receiving signal S1 in each of the two measurement regions R10, R13 adjacent to both outer sides of the integrated region TR12 corresponding to the determined peak position identification region R21. In this case, the threshold control unit 6 may calculate, for each measurement region R1, an average value of amounts of received light in the light receiving signals S1 received by the plurality of light receiving elements included in the measurement region R1 as a representative value of the amount of received light in the light receiving signal S1. The representative value of the amount of received light may be a value (for example, a maximum value or a minimum value) other than the average value.

When the average value of the amounts of received light for each measurement region R1 is used as the representative value of the amount of received light, the threshold control unit 6 may estimate the offset amount of received light in the integrated region TR including the maximum light receiving position according to the following steps. For example, as shown in Fig. 3, when the maximum light receiving position is included in the peak position identification region R21, the integrated region TR12 is identified corresponding to the peak position identification region R21. For example, the threshold control unit 6 calculates the offset amount of received light in the integrated region TR12 according to (A₀ + A₃)/2. When the maximum light receiving position is included in a peak position identification region R22, the integrated region TR23 is identified corresponding to a peak position identification region R22. For example, the threshold control unit 6 calculates the offset amount of received light in the integrated region TR23 according to (A₁ + A₄)/2. Here, an amount Aₙ of received light is a representative value (for example, an average value) of an amount of received light in a measurement region R1n.

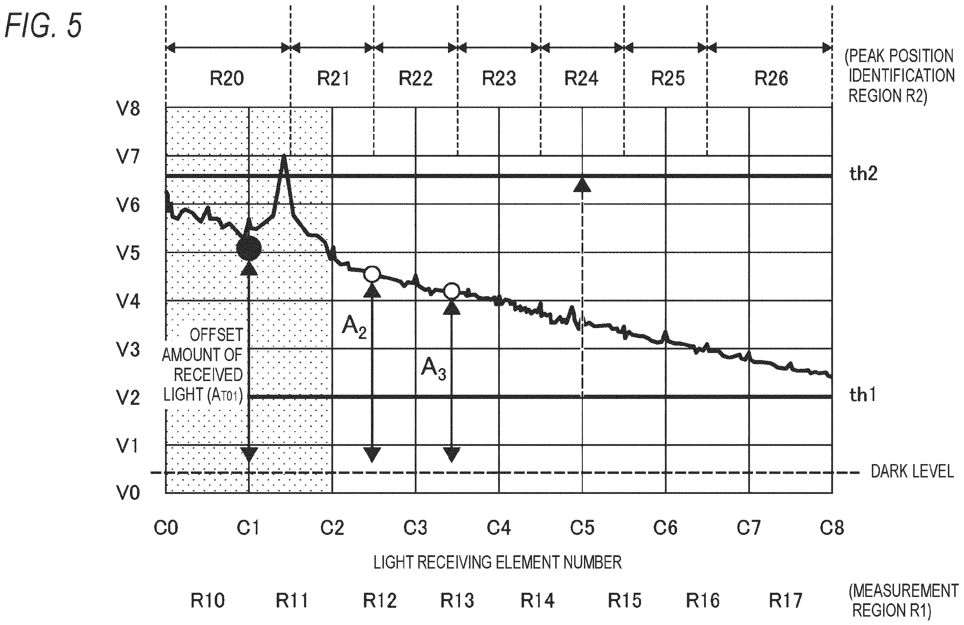

Fig. 5 is a graph showing another example of estimating an amount of received light of a disturbance light component by the measurement device 50. In an example in Fig. 5, a peak position (maximum light receiving position) of the intensity distribution S20 is located in a peak position identification region R20. In this example, there is no adjacent measurement region R1 on a left side (a smaller side on the x axis (a horizontal axis in Fig. 5)) of an integrated region TR01 corresponding to the peak position identification region R20. Therefore, the threshold control unit 6 may estimate an amount of received light of the disturbance light component based on amounts A₂, A₃ of received light as representative values in the light receiving signals S1 in the two measurement regions R12, R13 adjacent to and on one outer side (for example, a right side, a larger side on the x axis) of the integrated region TR01.

For example, as shown in Fig. 5, when a maximum light receiving position is included in the peak position identification region R20, the integrated region TR01 is identified corresponding to the peak position identification region R20. For example, the threshold control unit 6 calculates an offset amount of received light in the integrated region TR01 according to (5A₂ - 3A₃)/2. Accordingly, even when the peak position identification region R2 or the integrated region TR including the maximum light receiving position is located at an end portion of the light receiving area 8, the measurement device 50 can estimate the offset amount of received light in the integrated region TR using an external division point, and can determine the appropriate threshold th.

The threshold control unit 6 may estimate the offset amount of received light in the integrated region TR based on a representative value of an amount of received light in each of the plurality of measurement regions R1 not adjacent to the integrated region TR including the maximum light receiving position. The threshold control unit 6 may estimate the offset amount of received light in the integrated region TR based on representative values of amounts of received light in three or more measurement regions R1 outside the integrated region TR including the maximum light receiving position. When the three or more amounts of received light are obtained, the threshold control unit 6 may estimate the offset amount of received light in the integrated region TR according to various known approximation methods instead of a linear approximation method.

Next, variations of threshold control will be described.

The threshold control unit 6 may control the threshold th so as not to exceed an upper limit value. An amount of light received by the light receiving unit 4 can be adjusted by adjusting a light projecting time of the projection light L1 from the light projecting unit 1. The upper limit value of the threshold th is determined in consideration of a receivable amount of light according to the amount of light received by the light receiving unit 4. The light projecting unit 1 may adjust an amount of projected light so as to be equal to or larger than the upper limit value of the threshold th and equal to or smaller than an upper limit value of the receivable amount of light. The upper limit value of the threshold th may be stored in the storage unit 5M.

For example, in a case where the threshold th is controlled so as to change from the initial setting threshold th1 to the estimated threshold th2, the threshold control unit 6 may determine the estimated threshold th2 as the upper limit value when an estimated value of the estimated threshold th2 is equal to or larger than the upper limit value. The estimated value of the estimated threshold th2 is the initial estimated threshold th2 calculated by the threshold control unit 6 in consideration of the offset amount of received light in the integrated region TR without considering the upper limit value. Therefore, the threshold control unit 6 can prevent the estimated threshold th2 from being excessively large.

The threshold control unit 6 may control a change amount of the threshold th not to exceed an upper limit change amount. For example, in a case where the threshold th is controlled so as to change from the initial setting threshold th1 to the estimated threshold th2, the threshold control unit 6 may determine the estimated threshold th2 by adding the upper limit change amount to the initial setting threshold th1 when a difference between the initial setting threshold th1 and the estimated value of the estimated threshold th2 is larger than a predetermined value, that is, when the change amount of the threshold th is larger than the upper limit change amount. Therefore, the threshold control unit 6 can prevent a rapid change in the estimated threshold th2 and a rapid change in a measurement result of the object 10 using the estimated threshold th2.

A timing at which the threshold control unit 6 performs the threshold control is as desired. For example, the timing of the threshold control and a measurement timing of the object 10 may be the same. For example, the threshold control unit 6 may control the threshold th each time the object 10 is measured. The threshold control unit 6 may control the threshold th each time the light receiving signal S 1 (received light waveform) is acquired.

The timing of the threshold control and the measurement timing of the object 10 may be different timings. For example, the light projecting unit 1 may project projection light for measurement different from that for threshold control onto the object 10, and the light receiving unit 4 may generate a light receiving signal S11 for measurement different from that for threshold control in response to receiving reflected light for measurement obtained by reflecting or scattering the projection light by the object 10. The distance calculation unit 7 may identify a light receiving element whose amount of received light in the light receiving signal S11 received by the light receiving unit 4 is equal to or larger than the threshold th that has been controlled by the threshold control unit 6, and may measure the object 10 based on a position of the identified light receiving element. That is, the distance calculation unit 7 may measure the object 10 using the projection light and the reflected light for measurement separately from the projection light L1 and the reflected light L2 used for the threshold control.

In this way, the measurement device 50 according to the present embodiment identifies the peak position identification region R2 including a maximum light receiving position using the peak position identification region R2 different from a region (measurement region R1) at the time of actual measurement (for example, at the time of distance measurement). The measurement device 50 identifies the integrated region TR corresponding to the identified peak position identification region R2, calculates an offset amount of received light in the integrated region TR, and estimates disturbance light at, for example, a central position of the integrated region TR. The estimated disturbance light corresponds to a variable dark level. The measurement device 50 can adjust the threshold th according to the estimated disturbance light.

For example, it is assumed that the dark level varies to a large value as a whole. In this case, the initial setting threshold th1 is relatively small with respect to the dark level, and the number of light receiving elements that receive amounts of received light larger than the initial setting threshold th1 increases. That is, the reflected light L2 is received not only in the vicinity of a peak position but also in a wide range of the light receiving area 8 with an amount of received light equal to or larger than the initial setting threshold th1. In such a case, the distance calculation unit 7 calculates a light receiving center position in the wide range of the light receiving area 8, whereby measurement accuracy of the object 10 may be reduced. In contrast, according to the measurement device 50, the initial setting threshold th1 is changed to the estimated threshold th2 according to an estimation result of the disturbance light that varies due to the dark level. Accordingly, the number of light receiving elements that receive amounts of received light equal to or larger than the estimated threshold th2 in the light receiving area 8 can be reduced, and the reflected light L2 corresponding to the amount of received light equal to or larger than the estimated threshold th2 is received only in the vicinity of the peak position in the light receiving area 8. Therefore, the measurement device 50 can prevent a decrease in the measurement accuracy of the object 10.

The measurement device 50 derives the offset amount of received light in the integrated region TR using the amount of received light in the measurement region R1 outside the integrated region TR where the maximum light receiving position is present, and does not use an amount of received light in the integrated region TR to derive the offset amount of received light in the integrated region TR. In the integrated region TR, the amount of received light in a signal component (that is, a component that is originally desired to be acquired other than the disturbance light) of the reflected light L2 obtained by reflecting or scattering the projection light L1 is large. Therefore, since the measurement device 50 can derive the offset amount of received light in the integrated region TR using the amount of received light in the measurement region R1 in which the component that is originally desired to be acquired is excluded and a large amount of disturbance light component is included, estimation accuracy of the disturbance light can be improved.

A case where the offset amount of received light is a positive value has been mainly exemplified in the present embodiment, but the present invention is not limited thereto. An offset amount of received disturbance light may be a negative value. When the offset amount of received disturbance light is the negative value, the estimated threshold th2 is changed to be smaller than the initial setting threshold th1. The threshold control unit 6 may estimate the disturbance light at a position other than the central position in the integrated region TR, for example, may estimate the disturbance light at the maximum light receiving position.

As described above, the measurement device 50 according to the above embodiment is configured to optically measure the object 10 using the threshold. The measurement device 50 includes: the light projecting unit 1 that projects the projection light L1 (an example of first projection light) onto the object 10; the light receiving unit 4 including a plurality of light receiving elements, the light receiving unit 4 being configured to generate the light receiving signal S1 (an example of a first light receiving signal) in response to receiving the reflected light L2 (an example of a first reflected light) obtained by reflecting or scattering the projection light L1 by the object 10; and the signal processing unit 5 configured to process the light receiving signal S1. The light receiving area 8 containing the plurality of light receiving elements of the light receiving unit 4 is divided into the plurality of measurement regions R1 defined by the plurality of first boundaries B1 that divide the plurality of light receiving elements into a plurality of groups corresponding to the plurality of measurement regions R1, each of the plurality of groups including one or more light receiving elements, and the light receiving area 8 is also divided into the plurality of peak position identification regions R2 defined by the plurality of second boundaries B2, the plurality of second boundaries B2 being different from the plurality of first boundaries B1. Each of the plurality of peak position identification regions R2 contains at least a part of one measurement region R1 and a part of another measurement region R1 adjacent to the one measurement region R1. The light receiving area 8 contains a plurality of integrated regions TR, and each of the plurality of integrated regions TR is formed by adjacent two of the plurality of measurement regions R1. The signal processing unit 5 is configured to determine a target peak position identification region R2 that is one of the plurality of peak position identification regions R2, the target peak position identification region R2 containing a position (maximum light receiving position) of a light receiving element where an amount of received light in the light receiving signal S1 is the maximum. The signal processing unit 5 is configured to estimate an amount of received light (offset amount of received light) of a disturbance light component in a target integrated region TR that is one of the plurality of integrated regions TR, the target integrated region TR containing the target peak position identification region R2, based on a representative value of an amount of received light in each of at least two of the plurality of measurement regions R1 located outside the target integrated region TR. The signal processing unit 5 is configured to control the threshold th based on the amount of received light of the disturbance light component.

Accordingly, the measurement device 50 can control the threshold th in consideration of the integrated region TR and the peak position identification region R2 for identifying a peak position in the light receiving signal S1, separately from the measurement region R1 used for measurement of the object 10. In this case, in the measurement device 50, even when the peak position (maximum light receiving position) is located at a boundary end portion of the measurement region R1, the peak position is not located at an end portion of the integrated region TR. That is, when the peak position in the measurement region R1 is located at the boundary end portion of the measurement region R1, the integrated region TR is selected such that the peak is located in the vicinity of a center of the integrated region TR. Therefore, a foot portion of the received light waveform indicating the light receiving signal S1 does not enter an outside region adjacent to the integrated region TR. Therefore, a signal component is located in the integrated region TR, and the disturbance light component other than the signal component is located outside the integrated region TR. The measurement device 50 can estimate a light receiving level of the disturbance light with high accuracy using the amount of received light outside the integrated region TR, and can appropriately determine the threshold th for measuring the object 10. Therefore, the measurement device 50 can reduce an influence of the disturbance light and improve measurement accuracy of the object.

The signal processing unit 5 may estimate the amount of received light of the disturbance light component based on a representative value of an amount of received light in the light receiving signal S1 in each of two measurement regions R1 adjacent to and on both outer sides of the target integrated region TR containing the target peak position identification region R2.

Accordingly, the measurement device 20 estimates the amount of received light of the disturbance light component using an amount of received light in the measurement region R1 in which the signal component that is originally desired to be acquired is substantially not included and a large amount of the disturbance light component is included, whereby the disturbance light in the integrated region TR can be estimated with high accuracy.

The signal processing unit 5 may estimate the amount of received light of the disturbance light component based on a representative value of an amount of received light in the light receiving signal S1 in each of two measurement regions R1 adjacent to and on one outer side of the target integrated region TR containing the target peak position identification region R2.

Accordingly, even when the peak position identification region R2 or the integrated region TR including the maximum light receiving position is located at an end portion of the light receiving area 8, the measurement device 50 can estimate the offset amount of received light in the integrated region TR using an external division point, and can determine the appropriate threshold th.

The representative value of the amount of received light in the light receiving signal S1 in each of the plurality of measurement regions R1 may be an average value of amounts of received light indicated in the light receiving signal S1 and received by the one or more light receiving elements included in a corresponding one of the plurality of measurement regions R1. Accordingly, a value of the amount of received light representing the measurement region R1 can be appropriately obtained.

At least one of the plurality of second boundaries B2 may be set at a central position between adjacent two of the plurality of first boundaries B1.

Accordingly, the peak position identification region R2 can include half of each of the two measurement regions R1. Therefore, a positional relationship among the measurement region R1, the peak position identification region R2, and the integrated region TR has symmetry. Therefore, the measurement device 50 can prevent disturbance light estimation in the integrated region TR from being performed based on an amount of received light at a position biased on a larger or smaller side on the x axis of the light receiving area 8, and can improve estimation accuracy in the disturbance light estimation.

In a case where the threshold is controlled so as to change from the initial setting threshold th1 (an example of a first threshold) to the estimated threshold th2 (an example of a second threshold), when an estimated value of the estimated threshold th2 is equal to or larger than an upper limit value, the signal processing unit 5 may set the estimated threshold th2 to the upper limit value.

Accordingly, the measurement device 50 can prevent the estimated threshold th2 from being excessively large in consideration of, for example, characteristics of the light projecting unit 1 or the light receiving unit 4.

In a case where the threshold is controlled so as to change from the initial setting threshold th1 to the estimated threshold th2, when a difference between the initial setting threshold th1 and an estimated value of the estimated threshold th2 is equal to or larger than an upper limit change amount, the signal processing unit 5 may set the estimated threshold th2 by adding the upper limit change amount to the initial setting threshold th1.

Accordingly, the measurement device 50 can prevent a rapid change in the estimated threshold th2 and a rapid change in a measurement result of the object 10 using the estimated threshold th2.

The signal processing unit 5 may be configured to: identify at least one light receiving element among the plurality of light receiving elements, the at least one light receiving element whose amount of received light indicated in the light receiving signal S 1 and received by the light receiving unit 4 is equal to or larger than the threshold; and measure the object 10 based on a position of each of the at least one light receiving element.

Accordingly, the measurement device 50 can determine the threshold th in consideration of the disturbance light component at the same timing as a measurement timing. Therefore, the measurement device 50 can measure the object 10 with high accuracy in a short time.

The light projecting unit 1 may be configured to project another projection light (an example of a second projection light) onto the object 10. The light receiving unit 4 may be configured to generate another light receiving signal (an example of a second light receiving signal) in response to receiving another reflected light (an example of a second reflected light) obtained by reflecting or scattering the another projection light by the object 10. The signal processing unit 5 may be configured to: identify at least one light receiving element among the plurality of light receiving elements, the at least one light receiving element whose amount of received light indicated in the another light receiving signal and received by the light receiving unit 4 is equal to or larger than the threshold th; and measure the object 10 based on a position of each of the at least one light receiving element.

Accordingly, the measurement device 50 can determine the threshold th in consideration of a disturbance light component at a timing different from a measurement timing. Therefore, the measurement device 50 can determine the threshold th at another timing, reduce a processing load at the time of measurement, and measure the object 10.

Although various embodiments have been described above with reference to the drawings, it is needless to say that the present invention is not limited to these embodiments. It is apparent that those skilled in the art can conceive of various modifications and alterations within the scope described in the claims, and it is understood that such modifications and alterations naturally fall within the technical scope of the present invention. In addition, the constituent elements in the above embodiment may be arbitrarily combined without departing from the scope of the invention.

In the above embodiment, the processor such as the CPU may be physically implemented in any manner. When a programmable processor is used, a processing content can be changed by changing a program, and thus a degree of freedom in designing the processor can be increased. The processor may be implemented by one semiconductor chip or may be implemented by a plurality of semiconductor chips physically. In a case of the plurality of semiconductor chips, controls according to the above embodiment may be implemented by different semiconductor chips. In this case, it can be considered that one processor is implemented by the plurality of semiconductor chips. The processor may be implemented by a member (a capacitor or the like) having a function different from that of the semiconductor chip. One semiconductor chip may implement functions of the processor and other functions. Functions of a plurality of processors may be implemented by one processor.

The present disclosure is useful for a measurement device and a measurement method capable of reducing an influence of disturbance light and improving measurement accuracy of an object.

## Claims

1. A measurement device (50) for optically measuring an object (10) using a threshold (th), the measurement device (50) comprising:
a light projecting unit (1) configured to project first projection light (L1) onto the object (10);
a light receiving unit (4) comprising a plurality of light receiving elements, the light receiving unit (4) being configured to generate a first light receiving signal (S1) in response to receiving first reflected light (L2) obtained by reflecting or scattering the first projection light (L1) by the object (10); and
a signal processing unit (5) configured to process the first light receiving signal (S1),
wherein a light receiving area (8) containing the plurality of light receiving elements of the light receiving unit (4) is divided into a plurality of measurement regions (R1) defined by a plurality of first boundaries (B1) that divide the plurality of light receiving elements into a plurality of groups corresponding to the plurality of measurement regions (R1), each of the plurality of groups comprising one or more light receiving elements, and the light receiving area (8) is also divided into a plurality of peak position identification regions (R2) defined by a plurality of second boundaries (B2) different from the plurality of first boundaries (B1),
wherein each of the plurality of peak position identification regions (R2) contains at least a part of one measurement region and a part of another measurement region adjacent to the one measurement region,
wherein the light receiving area (8) contains a plurality of integrated regions (TR), and each of the plurality of integrated regions (TR) is formed by adjacent two of the plurality of measurement regions (R1), and
wherein the signal processing unit (5) is configured to:
determine a target peak position identification region that is one of the plurality of peak position identification regions (R2), the target peak position identification region containing a position of a light receiving element where an amount of received light in the first light receiving signal (S1) is maximum;
estimate an amount of received light of a disturbance light component in a target integrated region that is one of the plurality of integrated regions (TR), the target integrated region containing the target peak position identification region, based on a representative value of an amount of received light in each of at least two of the plurality of measurement regions (R1) located outside the target integrated region; and
control the threshold (th) based on the amount of received light of the disturbance light component.

2. The measurement device (50) according to claim 1, wherein the signal processing unit (5) is configured to estimate the amount of received light of the disturbance light component based on a representative value of an amount of received light in the first light receiving signal (S1) in each of two measurement regions adjacent to and on both outer sides of the target integrated region containing the target peak position identification region.

3. The measurement device (50) according to claim 1, wherein the signal processing unit (5) is configured to estimate the amount of received light of the disturbance light component based on a representative value of an amount of received light in the first light receiving signal (S1) in each of two measurement regions adjacent to and on one side of the target integrated region containing the target peak position identification region.

4. The measurement device (50) according to any one of claims 1 to 3, wherein the representative value of the amount of received light in the first light receiving signal (S1) in each of the plurality of measurement regions (R1) is an average value of amounts of received light indicated in the first light receiving signal (S1) and received by the one or more light receiving elements included in a corresponding one of the plurality of measurement regions (R1).

5. The measurement device (50) according to any one of claims 1 to 4, wherein at least one of the plurality of second boundaries (B2) is set at a central position between adjacent two of the plurality of first boundaries (B 1).

6. The measurement device (50) according to any one of claims 1 to 5, wherein in a case where the threshold (th) is controlled so as to change from a first threshold (th1) to a second threshold (th2), when an estimated value of the second threshold (th2) is equal to or larger than an upper limit value, the signal processing unit (5) sets the second threshold (th2) to the upper limit value.

7. The measurement device (50) according to any one of claims 1 to 5, wherein in a case where the threshold (th) is controlled so as to change from a first threshold (th1) to a second threshold (th2), when a difference between the first threshold (th1) and an estimated value of the second threshold (th2) is equal to or larger than an upper limit change amount, the signal processing unit (5) sets the second threshold (th2) by adding the upper limit change amount to the first threshold (th1).

8. The measurement device (50) according to any one of claims 1 to 7, wherein the signal processing unit (5) is configured to:
identify at least one light receiving element among the plurality of light receiving elements, the at least one light receiving element whose amount of received light indicated in the first light receiving signal (S 1) and received by the light receiving unit (4) is equal to or larger than the threshold (th); and
measure the object (10) based on a position of each of the at least one light receiving element.

9. The measurement device (50) according to any one of claims 1 to 7,
wherein the light projecting unit (1) is configured to project second projection light onto the object (10), the second projection light being different from the first projection light (L1),
wherein the light receiving unit (4) is configured to generate a second light receiving signal in response to receiving second reflected light obtained by reflecting or scattering the second projection light by the object (10), and
wherein the signal processing unit (5) is configured to:
identify at least one light receiving element among the plurality of light receiving elements, the at least one light receiving element whose amount of received light indicated in the second light receiving signal and received by the light receiving unit (4) is equal to or larger than the threshold (th); and
measure the object (10) based on a position of each of the at least one light receiving element.

10. A measurement method for optically measuring an object (10) using a threshold (th), the measurement method comprising:
a step of projecting first projection light (L1) onto the object (10);
a step of generating, by a light receiving unit (4) comprising a plurality of light receiving elements, a first light receiving signal (S 1) in response to receiving first reflected light (L2) obtained by reflecting or scattering the first projection light (L1) by the object (10); and
a step of processing the first light receiving signal (S 1),
wherein a light receiving area (8) containing the plurality of light receiving elements of the light receiving unit (4) is divided into a plurality of measurement regions (R1) defined by a plurality of first boundaries (B 1) that divide the plurality of light receiving elements into a plurality of groups corresponding to the plurality of measurement regions (R1), each of the plurality of groups comprising one or more light receiving elements, and the light receiving area (8) is also divided into a plurality of peak position identification regions (R2) defined by a plurality of second boundaries (B2) different from the plurality of first boundaries (B 1),
wherein each of the plurality of peak position identification regions (R2) contains at least a part of one measurement region and a part of another measurement region adjacent to the one measurement region,
wherein the light receiving area (8) contains a plurality of integrated regions (TR), and each of the plurality of integrated regions (TR) is formed by adjacent two of the plurality of measurement regions (R1), and
wherein the step of processing the first light receiving signal (S 1) comprises:
a step of determining a target peak position identification region that is one of the plurality of peak position identification regions (R2), the target peak position identification region containing a position of a light receiving element where an amount of received light in the first light receiving signal (S 1) is maximum;
a step of estimating an amount of received light of a disturbance light component in a target integrated region that is one of the plurality of integrated regions (TR), the target integrated region containing the target peak position identification region, based on a representative value of an amount of received light in each of at least two of the plurality of measurement regions (R1) located outside the target integrated region; and
a step of controlling the threshold (th) based on the amount of received light of the disturbance light component.
